# EUROPEAN PATENT SPECIFICATION

(11) **EP 3 700 973 B1**
(45) Date of publication and mention of the grant of the patent: **20.11.2024**
(21) Application number: 18800768.6
(22) Date of filing: 24.10.2018
(51) Int. Cl.: C08K 5/00

(54) **COMPOUND FOR THE PREPARATION OF RUBBER PRODUCTS.**
VERBINDUNG ZUR HERSTELLUNG VON KAUTSCHUKPRODUKTEN
COMPOSÉ DESTINÉ À LA PRÉPARATION DE PRODUITS EN CAOUTCHOUC

(30) Priority: 27.10.2017 IT 201700122778
(43) Date of publication of application: 02.09.2020
(73) Proprietor: Bridgestone Corporation, Tokyo 104-8340 (JP)
(72) Inventor: STRAFFI, Paolo, 00128 Roma (IT); COSSU, Giancarlo, 00128 Roma (IT); PALUMBI, Maria Cecilia, 00128 Roma (IT); COMPARELLI, Roberto, 70126 Bari (IT)
(74) Representative: Marchetti, Alessio
(86) International application number: PCT/IB2018/058282
(87) International publication number: WO 2019/082086

(56) References cited:
- EP-A1- 1 508 590
- WO-A1-2016/075667
- "Ethylene-propylene rubber fluorinated graphite compsn. - used as gasket for ion-exchange membrane electrolytic bath", DERWENT, 1987, XP002297412

## Description

The present invention is related to a rubber compound for the manufacture of rubber articles.

The present invention finds particularly advantageous application in the preparation of pneumatic tyres, whereto the description will make explicit reference without, for this reason, loss of generality.

Recently, one of the topics for research in the field of rubber compounds has been concentrated on a possible replacement for zinc oxide (ZnO) as a vulcanization activator.

Due to the possible environmental implications thereof, it is required that the use of ZnO be limited, if not completely eliminated. Obviously, an excessive limitation of ZnO, if on the one hand it responds to requirements of an environmental character, on the other hand it may compromise the effective vulcanization of the compound, with negative consequences in terms of the mechanical characteristics of the resulting compound.

The need was therefore felt to provide an alternative to the use of ZnO in rubber compounds, which would be able to respect requirements of an environmental character, without for this reason altering the vulcanization of the resulting compound and, consequently, compromising the mechanical characteristics thereof.

The Applicant has unexpectedly found that a particular class of functionalized graphite is able to completely replace the presence of ZnO in compounds as the vulcanization activator and, at the same time, to maintain unaltered the mechanical characteristics of the resulting compound. From EP1508590 it is known to prepare vulcanizable rubber compositions comprising inter alia rubber, fluorinated graphite for the purpose of inhibiting reversion during high temperature vulcanization, a sulphur-based vulcanizing agent and an activator comprising zinc oxide and stearic acid.

The object of the present invention is a compound for the preparation of rubber products, comprising a cross-linkable unsaturated chain polymer base, a reinforcing filler and a vulcanization system; said vulcanization system comprising at least sulfur, one or more vulcanization accelerants and a vulcanization activator; said compound being characterized in that said vulcanization activator is exclusively halogenated graphite; said compound comprising neither stearic acid nor zinc oxide.

Here and hereinafter, halogenated graphite refers to a graphite wherein the carbon atoms are linked by covalent bonds with halogen atoms.

Here and hereinafter, the term "cross-linkable unsaturated chain polymer base" refers to any natural or synthetic non-cross-linked polymer capable of assuming all of the chemical-physical and mechanical characteristics typically assumed by elastomers after cross-linking (vulcanization) with sulfur-based systems.

Preferably, said halogenated graphite is a fluorinated graphite.

Preferably, said halogenated graphite is present in compound in a quantity of between 0.1 and 100 phr, more preferably between 0.5 and 20 phr.

A further object of the present invention is a pneumatic tyre portion manufactured with the compound object of the present invention.

A still further object of the present invention is a pneumatic tyre comprising a portion manufactured using a compound, object of the present invention.

A still further object of the present invention is the use of halogenated graphite as the only vulcanization activator in compounds for the preparation of rubber products.

For a better understanding of the present invention, the following examples are included for illustrative and non-limiting purposes.

### EXAMPLES

Two sets of compounds were prepared in order to test the capabilities of halogenated graphite as a vulcanization activator. The compounds of the first set (compounds A-D) comprise carbon black as a reinforcing filler, whilst the compounds of the second set (compounds E-H) comprise silica as a reinforcing filler.

Each of the two sets comprises a first comparison compound, wherein a vulcanization activator is not used (compound A and compound E), a second comparison compound wherein zinc oxide is used as a vulcanization activator (compound B and compound F), and two compounds according to the invention, wherein, as a vulcanization activator, an example of halogenated graphite is used in two respectively differing amounts (compound C, compound D and compound G, compound H).

The example compounds were obtained according to the procedure below:
- preparation of the compounds -

### (1^{st} mixing step)

Before the start of the mixing, a mixer with tangential rotors and an internal volume of between 230 and 270 liters was loaded with the cross-linkable polymer base and the carbon black or, as an alternative to the latter, the silica and the silane binder, thus reaching a filling factor of 66-72%.

The mixer was operated at a speed of 40-60 revolutions/minute, and the mixture thus formed was discharged once a temperature of 140-160°C had been reached.

### (2^{nd} mixing step)

The mixture obtained from the previous step was reworked in a mixer that was operated at a speed of 40-60 revolutions/minute and, thereafter, discharged once a temperature of 130-150°C had been reached.

### (final mixing step)

To the mixture obtained from the previous step were added the sulfur, the vulcanization accelerants and then, where provided for, either the halogenated graphite or ZnO in combination with stearic acid, reaching a filling factor of between 63-67%.

Contrary to that described above, the halogenated graphite, as is the case for zinc oxide, may be added during the first or second mixing step.

The mixer was operated at a speed of 20-40 revolutions/minute, and the mixture thus formed was discharged once a temperature of 100-110°C had been reached.

Tables I and II list the compositions in phr of the eight compounds described above.

**TABLE I**

| | A | B | C | D |
|---|---|---|---|---|
| Polymer Base | 100 | | | |
| Carbon black | 50 | | | |
| ZnO | -- | 1 | -- | -- |
| Stearic acid | -- | 2 | -- | -- |
| Halogenated graphite | -- | | 2 | 10 |
| Sulfur | 1.3 | | | |
| TBBS | 1 | | | |

**TABLE II**

| | E | F | G | H |
|---|---|---|---|---|
| Polymer Base | 100 | | | |
| Silica | 50 | | | |
| Silane bonding agent | 5 | | | |
| ZnO | -- | 1 | -- | -- |
| Stearic acid | -- | 2 | -- | -- |
| Halogenated graphite | -- | -- | 2 | 10 |
| Sulfur | 1.3 | | | |
| TBBS | 2 | | | |

The polymer base used is polyisoprene.

The carbon black used is classified as N330.

The silica used is marketed under the name Ultrasil VN3 GR by the company EVONIK and has a surface area of about 180 m²/g.

The silane binder used belongs to the class of polysulfide organosilanes and is marketed under the name SI75 by the company EVONIK.

The halogenated graphite used is fluorinated graphite marketed by the company SIGMA ALDRICH (CAS Number: 51311-17-2, code No. 372455).

TBBS is the acronym for the N-tert-butyl-2-benzothiazyl sulfenamide compound, and is used as a vulcanization accelerant.

In order to evaluate the cross-linking, rheometric, mechanical and dynamic mechanical properties thereof, respective samples were prepared from the compounds of tables I and II and subjected to a series of tests.

In particular, the cross-linking properties were measured by means of the X-link Density measurement (Flory, Paul; Rehner, John J. Chem. Phys. 11: 521-526(1943)); the rheometric properties were measured according to the ISO 6502 standard; the mechanical properties were measured according to the ISO 37 standard; the dynamic mechanical properties were measured according to the ISO 4664 standard.

The values obtained from the tests are listed in tables III and IV.

**TABLE III**

| | A | B | C | D |
|---|---|---|---|---|
| X-LINK Density | 0.49 | 1.40 | 0.90 | 1.08 |
| ML (dNm) | 3.12 | 2.98 | 3.25 | 3.35 |
| MH (dNm) | 10.16 | 12.38 | 11.01 | 12 |
| MH-ML (dNm) | 7.04 | 10.4 | 7.76 | 8.65 |
| t'10 (min) | 1.08 | 1.36 | 1.08 | 1.13 |
| t'50 (min) | 1.9 | 2.43 | 2.12 | 3.34 |
| t'90 (min) | 2.31 | 3.9 | 2.78 | 5.94 |
| TB (MPa) | 12.0 | 23.5 | 14.0 | 23.0 |
| 50% (MPa) | 0.6 | 0.9 | 0.7 | 0.9 |
| 100% (MPa) | 0.8 | 1.5 | 1.1 | 1.4 |
| 300% (MPa) | 2.8 | 7.3 | 4.7 | 7.0 |
| EB% (MPa) | 660 | 635 | 580 | 630 |
| E'25°C (MPa) | 5.61 | 7.41 | 6.64 | 7.88 |
| TANδ 25°C | 0.202 | 0.193 | 0.189 | 0.192 |

**TABLE IV**

| | E | F | G | H |
|---|---|---|---|---|
| X-LINK Density | 0.85 | 1.75 | 1.23 | 1.74 |
| ML (dNm) | 3.5 | 3.13 | 3.55 | 3.65 |
| MH (dNm) | 10.65 | 16.2 | 12.64 | 15.61 |
| MH-ML (dNm) | 7.15 | 13.07 | 9.09 | 11.96 |
| t'10 (min) | 0.27 | 1.03 | 0.29 | 0.41 |
| t'50 (min) | 0.85 | 2.61 | 1.02 | 1.6 |
| t'90 (min) | 1.46 | 3.75 | 2.88 | 4.83 |
| TB (MPa) | 11.2 | 23.0 | 16.4 | 24.0 |
| 50% (MPa) | 0.7 | 1.1 | 0.9 | 1.2 |
| 100% (MPa) | 0.9 | 1.7 | 1.4 | 1.9 |
| 300% (MPa) | 5.0 | 7.5 | 7.5 | 7.7 |
| EB% (MPa) | 380 | 600 | 400 | 600 |
| E'25°C (MPa) | 8.06 | 9.75 | 9.09 | 9.43 |
| TANδ 25°C | 0.16 | 0.145 | 0.155 | 0.159 |

The values from Tables III and IV demonstrate the surprising activity of the halogenated graphite as vulcanization activator. In fact, the results in relation to the properties indicated above demonstrate how the presence of halogenated graphite (compounds C, D, G, H) is comparable to that of zinc oxide (compounds B and F) and different than an absence of a vulcanization activator (compounds A ad E), favors the correct vulcanization of the compound.

In particular, the two sets of compounds (alternative use of carbon black or of silica as a reinforcing filler) show that the effectiveness of the halogenated graphite acting as a vulcanization activator is independent from the type of reinforcing filler used.

In conclusion, the present invention makes it possible to eliminate the use of zinc oxide in rubber compounds by means of the substitution thereof with halogenated graphite without, for this reason, in any way compromising the vulcanization of the same compound and, consequently, the mechanical characteristics thereof.

## Claims

1. Compound for the preparation of rubber products, comprising a cross-linkable unsaturated chain polymer base, a reinforcing filler and a vulcanization system; said vulcanization system comprising at least sulfur, one or more vulcanization accelerants and a vulcanization activator; said compound being **characterized in that** said vulcanization activator is exclusively halogenated graphite; said compound comprising neither stearic acid nor zinc oxide.

2. Compound according to claim 1, **characterized in that** said halogenated graphite is a fluorinated graphite.

3. Compound according to claim 1 or 2, **characterized in that** said halogenated graphite is present within the compound in an amount of between 0.1 and 100 phr.

4. Compound according to claim 1 or 2, **characterized in that** said halogenated graphite is present within the compound in an amount of between 0.5 and 20 phr.

5. Portion of a pneumatic tyre manufactured using the compound according to one of the preceding claims.

6. Pneumatic tyre comprising a portion according to claim 5.

7. Use of halogenated graphite as the only vulcanization activator in compounds for the preparation of rubber products.

8. Use according to claim 7, **characterized in that** said halogenated graphite is a fluorinated graphite.

9. Use according to claim 7 or 8, **characterized in that** the halogenated graphite is present within the compound in an amount of between 0.1 and 100 phr.

10. Use according to claims 7-9, **characterized in that** the halogenated graphite is present within the compound in an amount of between 0.5 and 20 phr.

## Patentansprüche

1. Mischung für die Herstellung von Kautschukprodukten, umfassend eine vernetzbare ungesättigte Polymerkettenbasis, einen verstärkenden Füllstoff und ein Vulkanisierungssystem; das Vulkanisierungssystem umfassend mindestens Schwefel, ein oder mehrere Vulkanisierungsbeschleuniger und einen Vulkanisierungsaktivator; wobei die Mischung **dadurch gekennzeichnet ist, dass** der Vulkanisierungsaktivator ausschließlich halogenierter Graphit ist; die Mischung umfassend weder Stearinsäure noch Zinkoxid.

2. Mischung nach Anspruch 1, **dadurch gekennzeichnet, dass** der halogenierte Graphit ein fluorierter Graphit ist.

3. Mischung nach Anspruch 1 oder 2, **dadurch gekennzeichnet, dass** der halogenierte Graphit innerhalb der Mischung in einer Menge von zwischen 0,1 und 100 phr vorhanden ist.

4. Mischung nach Anspruch 1 oder 2, **dadurch gekennzeichnet, dass** der halogenierte Graphit innerhalb der Mischung in einer Menge von zwischen 0,5 und 20 phr vorhanden ist.

5. Abschnitt eines Luftreifens, der unter Verwendung der Mischung nach einem der vorstehenden Ansprüche gefertigt ist.

6. Luftreifen, umfassend einen Abschnitt nach Anspruch 5.

7. Verwendung von halogeniertem Graphit als der einzige Vulkanisierungsaktivator in Mischungen für die Herstellung von Kautschukprodukten.

8. Verwendung nach Anspruch 7, **dadurch gekennzeichnet, dass** der halogenierte Graphit ein fluorierter Graphit ist.

9. Verwendung nach den Ansprüchen 7 oder 8,
**dadurch gekennzeichnet, dass** der halogenierte Graphit innerhalb der Mischung in einer Menge von zwischen 0,1 und 100 phr vorhanden ist.

10. Verwendung nach den Ansprüchen 7 bis 9,
**dadurch gekennzeichnet, dass** der halogenierte Graphit innerhalb der Mischung in einer Menge von zwischen 0,5 und 20 phr vorhanden ist.

## Revendications

1. Composé pour la préparation de produits en caoutchouc, comprenant une base polymère à chaîne insaturée réticulable, une charge de renforcement et un système de vulcanisation ; ledit système de vulcanisation comprenant au moins du soufre, un ou plusieurs accélérateurs de vulcanisation et un activateur de vulcanisation ; ledit composé étant **caractérisé en ce que** ledit activateur de vulcanisation est exclusivement un graphite halogéné ; ledit composé ne comprenant ni acide stéarique ni oxyde de zinc.

2. Composé selon la revendication 1, **caractérisé en ce que** ledit graphite halogéné est un graphite fluoré.

3. Composé selon la revendication 1 ou 2, **caractérisé en ce que** ledit graphite halogéné est présent à l'intérieur du composé en une quantité comprise entre 0,1 et 100 pcc.

4. Composé selon la revendication 1 ou 2, **caractérisé en ce que** ledit graphite halogéné est présent à l'intérieur du composé en une quantité comprise entre 0,5 et 20 pcc.

5. Portion d'un pneumatique fabriquée à l'aide du composé selon l'une des revendications précédentes.

6. Pneumatique comprenant une portion selon la revendication 5.

7. Utilisation de graphite halogéné comme seul activateur de vulcanisation dans des composés pour la préparation de produits en caoutchouc.

8. Utilisation selon la revendication 7, **caractérisée en ce que** ledit graphite halogéné est un graphite fluoré.

9. Utilisation selon les revendications 7 ou 8, **caractérisée en ce que** le graphite halogéné est présent à l'intérieur du composé en une quantité comprise entre 0,1 et 100 pcc.

10. Utilisation selon les revendications 7 à 9, **caractérisée en ce que** le graphite halogéné est présent à l'intérieur du composé en une quantité comprise entre 0,5 et 20 pcc.
